Europäisches Patentamt

European Patent Office

Office européen des brevets

(11) Publication number: **0 046 687**
**B1**

(12) **EUROPEAN PATENT SPECIFICATION**

(45) Date of publication of patent specification: **21.11.85**

(21) Application number: **81303873.4**

(22) Date of filing: **25.08.81**

(51) Int. Cl.⁴: **D 21 D 5/16,** D 21 D 5/02

(54) Screening apparatus for paper making stock.

(30) Priority: **25.08.80 US 181258**
**29.06.81 US 278803**

(43) Date of publication of application:
**03.03.82 Bulletin 82/09**

(45) Publication of the grant of the patent:
**21.11.85 Bulletin 85/47**

(84) Designated Contracting States:
**AT DE FR GB IT SE**

(56) References cited:
**US-A-3 617 008**
**US-A-4 105 543**
**US-A-4 155 841**

(73) Proprietor: **THE BLACK CLAWSON COMPANY**
**605 Clark Street**
**Middletown, Ohio 45042 (US)**

(72) Inventor: **Secor, Ronald F.**
**409 Breisford Avenue**
**Trenton Ohio (US)**

(74) Representative: **Warren, Anthony Robert et al**
**BARON & WARREN 18 Kensington Square**
**London W8 5HL (GB)**

Courier Press, Leamington Spa, England.

# 0 046 687

**Description**

Paper mills have for many years made extensive use, for the cleaning of paper making stock, of screening apparatus embodying a cylindrical perforated screening member defining supply and accepts chambers on the opposite sides thereof in a closed housing, and including a rotor member which operates in one of the chambers to keep the screening perforations open and free from solid material tending to cling to the screening surface. Commonly, the stock or furnish is delivered to the supply chamber adjacent one end of the screening cylinder, and the material rejected by the screening cylinder is collected and discharged from the opposite end of the supply chamber.

The applicant has manufactured and sold many such screens in accordance with a series of U.S. patents, commencing with Staege No. 2,347,716, and followed by Martindale No. 2,835,173, Seifert Nos. 3,849,302 and 4,105,543, and Chupka-Seifert No. 4,155,841. Starting with the construction shown in the Martindale patent, all such screens manufactured and sold by Applicant have been characterized by a rotor comprising bars or vanes of airfoil section moving in closely spaced but non-contacting relation with the surface of the screening cylinder for the purpose of creating alternating positive and negative pressure waves effective on the perforations in the screening cylinder to prevent plugging thereof.

The art has experimented widely with detailed variations in screens of the above type, including variations in the vane shape and other forms of rotor, and also in the size, configuration, and spacing of the perforations in the screening cylinder. Thus since the era of the Staege U.S. patent in the mid-1940's, many screening cylinders have been fabricated with multiple uniformly cylindrical drilled perforations, which commonly range in diameter from approximately 1.27 to 3.18 mm (0.050 inch to 0.125 inch).

In more recent years, the trade has been offered pressure screens generally of the above type wherein the perforations in the screening cylinder are elongated slots rather than round holes, with the slots running either circumferentially or axially of the cylinder. Typical such constructions are shown in Lamort Patent No. 3,617,008, Holz Patent No. 3,581,983, and the above noted Siefert '302 and Chupka-Siefert patents.

Both of the Lamort and Chupka-Seifert U.S. patents also show, in addition to slotted cylinders, a plurality of shoulders or small bars running generally axially of the screen cylinder in circumferentially spaced relation around the inlet side of the cylinder, and both also show the rotor vanes on the inlet side of the cylinder. This arrangement is described by Lamort as preventing clogging of the screening slots by fiber, albeit in an undescribed manner. In the Chupka-Seifert U.S. patent, the purpose of the bars is described as to generate a field of high intensity, fine scale turbulence in the stock adjacent the inlet side of the screen cylinder and thereby to effect screening of paper fiber stock with minimum fractionation thereof on the basis of fiber length.

The disclosure of the Chupka-Seifert U.S. patent is limited to screen cylinders provided with circumferentially extending slots of a width range of only approximately 0.025—0.2 mm (0.001—0.008 inch). A later Chupka-Seifert U.S. application, Serial No. 145,654 filed May 2, 1980, discloses the application of a similar multi-bar arrangement to a screen cylinder having circumferentially extending slots of a substantially greater range of widths, i.e. as wide as approximately 0.76 mm (0.030 inch) although the preferred width range is stated to be approximately 0.36—0.56 mm (0.014—0.022 inch), with resulting increase in the capacity of the screen in terms of both tonnage per unit of time and the power requirements per unit of accepted fiber.

In accordance with the present invention, it has been discovered that when a pressure screen is equipped with a perforated screening cylinder provided with circular screening holes, and multiple bars having dimensions lying within specific ranges spaced circumferentially about the inlet side thereof, dramatic improvements of the capabilities of the screen resulted. More particularly, when compared with standard screens having round holes in the screening cylinder in accordance with the above noted Seifert patents, the screen of the invention is capable of producing a higher tonnage of accepted fiber per day while screening stock of higher consistency through small holes, and also will draw less power per unit of accepted fiber. Test results supporting this summary are set forth below in conjunction with the description of the illustrated preferred embodiments of the invention.

According to one aspect of the present invention there is provided a cylindrical screen member for installation in the housing of screening apparatus for paper fiber stock to separate the interior thereof into a supply chamber and an accepts chamber, the screening apparatus being of the type which has rotor means including vanes movable in said supply chamber along a cylindrical path concentric with and spaced a predetermined distance from said screen member to cause the stock to circulate in a similar circular path around the inlet side of said screen member, said screen member having multiple perforations therethrough, and having secured thereto a plurality of bars extending generally axially thereof along and in circumferentially generally uniformly spaced relation around and projecting generally radially from the inlet side of said screen member, the bars, when the vanes move in said cylindrical path in the supply chamber during operation of the screening apparatus, defining with the adjacent surface of the inlet side of the screen member a series of pockets in which, in operation, turbulence is generated and the circulation of the stock is interrupted, characterised by the combination of perforations which are substantially cylindrical, with bars which are arranged so that the circumferential spacing of adjacent bars is in the range

2

of approximately 6.35 mm to 127 mm, and are sized so that the dimension of each of said bars measured radially of said screen member is in the range of approximately 1.59 to 12.7 mm.

According to another aspect of the invention there is provided screening apparatus for paper fiber stock comprising a housing, a cylindrical screen member within said housing separating the interior thereof into a supply chamber and an accepts chamber on opposite sides of said screen member and having multiple perforations therethrough, inlet means for supplying the stock to said supply chamber for passage through said perforations to said accepts chamber, separate outlet means for rejected and accepted stock from said supply and accepts chambers, rotor means drivable by drive means, said rotor means including vanes movable in said supply chamber along a cylindrical path concentric with and spaced a predetermined distance from said screen member to cause the stock to circulate in a similar circular path around the inlet side of said screen member, said screen member having multiple perforations therethrough, and having secured thereto a plurality of bars extending generally axially thereof along and in circumferentially generally uniformly spaced relation around and projecting generally radially from the inlet side of said screen member, the bars, when the vanes move in said cylindrical path in the supply chamber during operation of the screening apparatus, defining with the adjacent surface of the inlet side of the screen member a series of pockets in which, in operation, turbulence is generated and the circulation of the stock is interrupted, characterised:

(a) by the combination of perforations which are substantially cylindrical, with bars which are arranged so that the circumferential spacing of adjacent bars is in the range of approximately 6.35 mm to 127 mm, and are sized so that the dimension of each of said bars measured radially of said screen member is in the range of approximately 1.59 mm to 12.7 mm; and

(b) in that the radial spacing between the bars and the vanes is in the range of approximately 0.25 to 9.35 mm, and in that the radial dimension of each of said bars is equal to a major portion of said predetermined distance between said vanes and said screen member.

In order that the invention may be more readily understood, reference will now be made to the accompanying drawings, in which:

Fig. 1 is a perspective view, partly broken away, of pressure screening apparatus embodying the invention and having a screening cylinder provided with circular screening holes;

Fig. 2 is an enlarged fragmentary section taken radially through the screening cylinder in the screen of Fig. 1;

Fig. 3 is a view similar to Fig. 2 showing a screening cylinder embodying the invention designed for operation with the outer side thereof facing the inlet chamber; and

Fig. 4 is a fragmentary view illustrating an alternative orientation of the bars on the inlet side of the screening cylinder in Fig. 1.

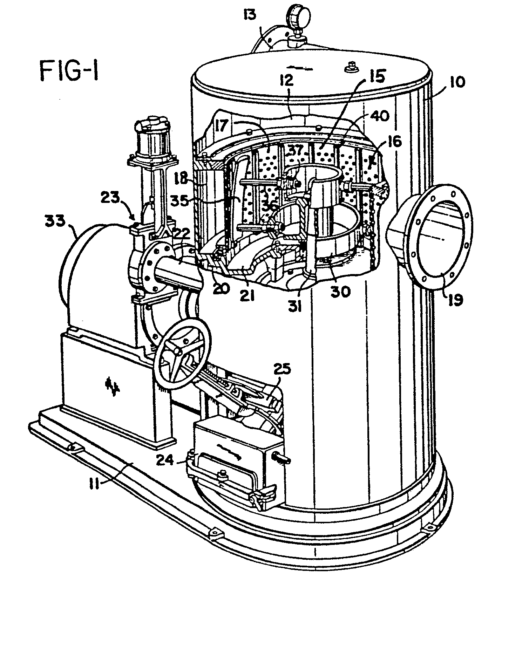

The screening apparatus shown in Fig. 1 is constructed generally in accordance with Seifert U.S. Patent No. 4,105,543 with certain exceptions in accordance with the invention. It comprises a main housing 10 on a base 11, and in the upper end of the housing is an inlet chamber 12 having a tangential inlet port 13 to which the furnish is fed under pressure as is customary with such screening apparatus. A cylindrical screening member 15 provided with multiple substantially circular holes 16 divides the interior of the housing below chamber 12 into a central supply chamber 17 and an accepts chamber 18 having an outlet port 19.

The bottom wall 20 of the supply chamber 17 includes a trough 21 leading to a discharge port 22 provided with a control valve assembly 23 which can be preset to provide a desired continual bleed of reject-rich stock. Heavy particles which settle into the trough 21 drop therefrom to the heavy trash collection box 24 by way of manually controlled valve 25 for intermittent removal.

A rotor 30 is supported on a drive shaft 31 in the center of the supply chamber 17 and is driven through suitable gearing or belts by a motor 33 also mounted on the base 11. Vanes or bars 35 are mounted on the rotor 30 by support rods 36, and adjustable connections 37 between the inner ends of rods 36 and rotor 30 provide for positioning the vanes 35 in properly spaced relation with the inner surface of screening member 15.

The vanes 35 extend the full length of the screening surface of screen member 15, and they are preferably helically curved as shown and so arranged that the upper end of each vane is spaced forwardly of the lower end in the direction of rotation of the rotor, shown as clockwise. Two vanes 35 are shown, but other numbers can be used, and in general a greater number, e.g., four, may make possible improved operation at higher consistencies.

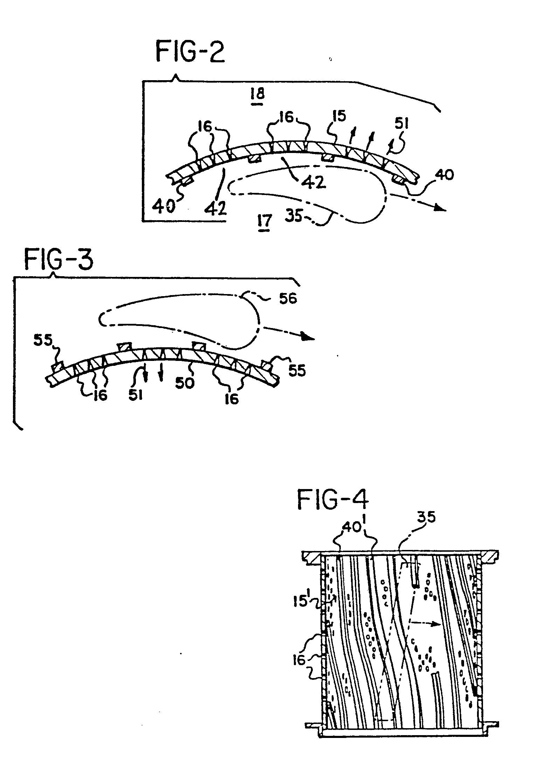

As is also shown in Figure 2, the screening cylinder 15 is provided along its inner (inlet) side with a plurality of bars 40, shown as of essentially square section, which extend generally axially thereof in circumferentially spaced relation, and cooperate with the surface portions of the member 15 therebetween to form a series of shallow pockets 42. The radial dimension between the vanes 35 and the radially inner surfaces of the bars 40 should be relatively small, preferably of the order of 1.59 mm (1/16 inch), but it may vary within a range of approximately 0.25—9.53 mm (0.010—0.375 inch).

Outstanding results in the testing of the invention have been obtained utilizing square bars approximately 6.35 mm (1/4 inch) wide on each side and spaced approximately 50.8 mm (2 inches) apart, but these values are subject to substantial variation. For example, the spacing between adjacent bars may range from approximately 6.35 to 127 mm (1/4 inch to 5 inches), with resulting change in the number of

3

# 0 046 687

bars, and the size of rectangular bars may range from approximately 1.59 to 12.7 mm (1/16 to 1/2 inch) on a side. When rectangular bars are used, their larger dimension should preferably extend radially of the screening cylinder to minimize reduction in the open screening area.

In operation, the natural effect of the rotational movement of the vanes 35 in the circular path which they occupy will tend to create similar circulation of an annular layer of stock adjacent the inner surface of the cylinder 15. This movement of the stock, however, will be interrupted by the successive bars 40, which will in effect peel off the outer portion of the circulating layer and divert it into the associated pockets 42.

The stock diverted into each of the pockets 42 will have a substantial circulatory momentum and will therefore tend to reverse its direction of flow within the pocket into which it is diverted. Since the action of the vanes is also to create alternating pressure waves through the holes 16, which are radially outward while each vane approaches each pocket and radially inward as each vane passes the pocket, the result of the combination of forces is the development of a high degree of local turbulence in each pocket.

At the same time, the interior of the supply chamber 17 is under continuous pressure from the pump by which stock is supplied to the screen, and there is therefore a force continuously urging stock to discharge through the holes 16 into the accepts chamber 18 as indicated by the arrows 51. The turbulence within the pockets has the effect of keeping the fibers within each pocket in a continuous condition of changing random orientation and thereby promotes their passage through the holes 16, particularly the long fibers which otherwise tend to become aligned tangentially of the cylinder and thereby to flow past the holes 16 instead of through them.

The validity of this theoretical explanation of the operation of the screen embodying the invention is supported by tests in both the laboratory and the field. Thus in one series of tests, a screen constructed as shown in the above Seifert U.S. '302 patent and provided with screening holes approximately 2.39 mm (.094 inch) in diameter was compared with a screen in accordance with the invention wherein the screen cylinder 15 was provided with holes of the same approximately 2.39 mm (0.94-inch) diameter and thirty-nine approximately 6.35 mm (1/4×1/4 inch) bars 40 evenly spaced around its inner surface. In both cases, the feed was waste corrugated stock having a freeness in the range indicated below, and the tests were conducted at two rotor speeds, 442 RPM and 605 RPM.

With a conventional screen, the maximum accepts output at 442 RPM was approximately 142 tonnes (140 tons) per day, the maximum consistency for the feed stock was approximately 1.40%, and the maximum corresponding values at 605 RPM were approximately 285 tonnes (280 tons) per day and 2.7%. Further, under both sets of operating conditions, substantial fractionation of the feed stock occurred, and the reject rates were relatively high, e.g. of the order of 30%. In contrast, the results obtained for the screen embodying the invention were as tabulated below:

4

0 046 687

| | | | Consistency | Freeness | T/D | RPM | Tonnes/D |
|---|---|---|---|---|---|---|---|
| Run No. 1 | Feed | | 1.39 | 545 | 287.7 | 442 | 293.4 |
| | Acc. | | 1.39 | 525 | 250.2 | " | 255.2 |
| | Rej. | | 1.39 | 586 | 37.5 | " | 38.3 |
| Run No. 2 | Feed | | 1.33 | 545 | 276.7 | " | 281.2 |
| | Acc. | | 1.33 | 525 | 247.4 | " | 252.3 |
| | Rej. | | 1.48 | 580 | 13.3 | " | 13.6 |
| Run No. 3 | Feed | | 2.17 | 600 | 414.6 | " | 422.9 |
| | Acc. | | 2.07 | 611 | 341.6 | " | 348.4 |
| | Rej. | | 2.83 | 645 | 73.0 | " | 74.5 |
| Run No. 4 | Feed | | 2.72 | 625 | 491.3 | " | 501.1 |
| | Acc. | | 2.69 | 605 | 443.9 | " | 452.8 |
| | Rej. | | 3.16 | 635 | 47.4 | " | 48.3 |
| Run No. 5 | Feed | | 2.81 | 620 | 572.3 | 605 | 583.7 |
| | Acc. | | 2.74 | 600 | 493.2 | " | 503.1 |
| | Rej. | | 3.38 | 640 | 79.1 | " | 80.7 |
| Run No. 6 | Feed | | 2.79 | 625 | 677.3 | " | 690.8 |
| | Acc. | | 2.74 | 605 | 616.5 | " | 628.8 |
| | Rej. | | 3.38 | 638 | 60.8 | " | 62.0 |

Note particularly the relatively small difference in each of the above runs between the freeness values of the feed and reject, which demonstrates the special advantage of the screen embodying the invention in its ability to accept a high proportion of the long fibers which are commonly rejected by other screens. It is also important that in all runs except No. 5, the feed was at the limit of the capacity of the supply pump, and if more supply pressure had been available, higher capacities would have been obtained.

Another feature, which has value in two different respects, is the relatively low reject rate in all of the above test runs, namely a reject rate running from less than 10% to a maximum of less than 20%. Not only in this higher yield of value in its own right, but the low volume of reject flow contributes to overall saving of power and capital cost because both the equipment and the power needed to handle with relatively small reject flow is correspondingly less than with conventional screens. Further, because screens embodying the invention have proved to be capable of substantially higher capacity than conventional screens of the same size, capital cost and power savings can be effected by installing either smaller or fewer screens.

The value of the invention has also been demonstrated in field testing wherein a screen cylinder embodying the invention, and of the same size and construction as in the above lab test runs, replaced a screen cylinder constructed as shown in Seifert U.S. '543 having holes approximately 3.18 mm (0.125 inch) in diameter. The feed in that mill was waste corrugated stock which had been extracted from a pulper through holes approximately 15.88 mm (5/8 inch) in diameter and was therefore relatively very "dirty" stock.

In previous tests, using a screen as in Seifert U.S. '543 with approximately 2.39 mm (0.94 inch) screening holes, the screen would plug before its capacity reached an acceptable level, and even with the much larger approximately 3.18 mm (0.125 inch) holes, the maximum capacity of the screen, operating at 700 RPM, was of the order of 306 tonnes (300 tons) per day at a feed consistency of 2.25—2.50%. In contrast, when the same screen was equipped with a screen cylinder embodying the invention, and with approximately 2.39 mm (0.094 inch) holes, the following test results were obtained:

|  |  | Consistency | Freeness | T/D | RPM | Tonnes/D |
|---|---|---|---|---|---|---|
| Run No. 1 | Feed | 2.52 | 575 | 274.6 | 655 | 280.1 |
|  | Acc. | 2.27 | 535 | 203.4 | " | 207.5 |
|  | Rej. | 3.79 | 590 | 71.2 | " | 72.6 |
| Run No. 2 | Feed | 2.52 | 570 | 321.8 | " | 328.2 |
|  | Acc. | 2.35 | 540 | 265.2 | " | 270.5 |
|  | Rej. | 3.79 | 590 | 56.6 | " | 57.7 |
| Run No. 3 | Feed | 3.73 | 545 | 406.4 | " | 414.5 |
|  | Acc. | 3.62 | 530 | 360.0 | " | 367.2 |
|  | Rej. | 4.12 | 565 | 100.4 | " | 102.4 |

The difference between Runs No. 1 and 2 was that Run No. 1 used the previous standard operating conditions for the feed, which was at approximately 6878 litres (1816 gallons) per minute, while for Run No. 2, the feed was increased to the maximum of which the system was capable, approximately 8060 litres (2128 gallons) per minute, and which would cause the previous screen to plug. For Run No. 3, the feed was at the same rate as for Run No. 1. The results of all runs was to produce accepted stock which was not only of higher freeness than with the larger screening holes of the previous conventional screen, but also substantially cleaner by reason of rejection by the approximately 2.39 mm (0.094-inch) holes of materials which would pass through the approximately 3.18 mm (0.125-inch) holes.

In subsequent testing in the same mill, a screen cylinder embodying the invention and provided with holes approximately 2 mm (0.079 inch) in diameter replaced the approximately 2.39 mm (0.094 inch) hole screen cylinder previously tested, and the following test results were obtained in a measured run:

| Consistency | Freeness | T/D | RPM | Tonnes/D |
|---|---|---|---|---|
| 3.19 | 570 | 323.5 | 655 | 330 |
| 3.11 | 560 | 250.9 | " | 255.9 |
| 3.50 | 585 | 72.7 | " | 74.2 |

Observation hand sheets showed that with the approximately 2 mm (0.079 inch) holes, more dirt was rejected, and the accepts were cleaner than with approximately 2.39 mm (0.094 inch) holes. In addition, the approximately 2 mm (0.079 inch) hole cylinder required only approximately 108.3 kW (145.2 h.p.) as compared with the approximately 2.39 mm (0.094 inch) holes screen cylinder which required approximately 114.1 kW (153 h.p.) at the same rotor speed.

Figs. 3—4 illustrate variations in screen cylinder constructions embodying the invention. Thus Fig. 3 shows a screen cylinder 50 for use in a pressure screen wherein the flow is the converse of that in Fig. 1, namely radially inwardly through the cylinder 50, as indicated by the arrows 51, from a supply chamber surrounding the cylinder 50 to an accepts chamber inside the cylinder. For such installations, cylinders having round holes of the same size range indicated above can be used, but the bars 55 must be mounted on the outside of the screen, for cooperation with rotor vanes 56.

It is not essential to the invention that the bars 40 or 55 be of any particular cross-section, but the rectangular bars illustrated in the drawing have the virtues of being simple and inexpensive to product and of being readily machined along one surface to the proper convex curvature to match the surface of the screen cylinder to which they are to be welded or otherwise secured.

In theory, it would be desirable to arrange the bars at an angle to the axis of the screen cylinder in the opposite direction from the inclination of the vanes 35, as shown at 15' and 40' in Fig. 4, to create a scissor angle between the bars and the rotor vanes promoting movement of reject material axially of the cylinder. However, the test operations summarized above have established that there is so little thickening of the reject material, as compared with the consistency of the feed stock, that adequate movement and discharge of the reject takes place when the bars are straight and aligned with the axis of the cylinder, an arrangement which is easier and cheaper to produce.

**Claims**

1. A cylindrical screen member (15, 50) for installation in the housing (10) of screening apparatus for

6

paper fiber stock to separate the interior thereof into a supply chamber (17) and an accepts chamber (18), the screening apparatus being of the type which has rotor means (30) including vanes (35, 56) movable in said supply chamber (17) along a cylindrical path concentric with and spaced a predetermined distance from said screen member (15, 50) to cause the stock to circulate in a similar circular path around the inlet side of said screen member, said screen member having multiple perforations (16) therethrough, and having secured thereto a plurality of bars (40, 55) extending generally axially thereof along and in circumferentially generally uniformly spaced relation around and projecting generally radially from the inlet side of said screen member, the bars, when the vanes move in said cylindrical path in the supply chamber during operation of the screening apparatus, defining with the adjacent surface of the inlet side of the screen member a series of pockets in which, in operation, turbulence is generated and the circulation of the stock is interrupted, characterised by the combination of perforations (16) which are substantially cylindrical, with bars (40, 55) which are arranged so that the circumferential spacing of adjacent bars (40, 55) is in the range of approximately 6.35 mm to 127 mm, and are sized so that the dimension of each of said bars measured radially of said screen member (15, 50) is in the range of approximately 1.59 mm to 12.7 mm.

2. Screening apparatus for paper fiber stock comprising a housing (10), a cylindrical screen member (15, 50) within said housing (10) separating the interior thereof into a supply chamber (17) and an accepts chamber (18) on opposite sides of said screen member and having multiple perforations (16) therethrough, inlet means (12, 13) for supplying the stock to said supply chamber for passage through said perforations to said accepts chamber, separate outlet means (19, 24) for rejected and accepted stock from said supply and accepts chambers, rotor means (30) drivable by drive means (33), said rotor means (30) including vanes (35, 56) movable in said supply chamber (17) along a cylindrical path concentric with and spaced a predetermined distance from said screen member (15, 50) to cause the stock to circulate in a similar circular path around the inlet side of said screen member, said screen member having multiple perforations (16) therethrough, and having secured thereto a plurality of bars (40, 55) extending generally axially thereof along and in circumferentially generally uniformly spaced relation around and projecting generally radially from the inlet side of said screen member, the bars, when the vanes move in said cylindrical path in the supply chamber during operation of the screening apparatus, defining with the adjacent surface of the inlet side of the screen member a series of pockets in which, in operation, turbulence is generated and the circulation of the stock is interrupted, characterised:

(a) by the combination of perforations (16) which are substantially cylindrical, with bars (40, 55) which are arranged so that the circumferential spacing of adjacent bars (40, 55) is in the range of approximately 6.35 mm to 127 mm, and are sized so that the dimension of each of said bars measured radially of said screen member (15, 50) is in the range of approximately 1.59 mm to 12.7 mm; and

(b) in that the radial spacing between the bars (40, 55) and the vanes is in the range of approximately 0.25 to 9.35 mm, and in that the radial dimension of each of said bars (40, 55) is equal to a major portion of said predetermined distance between said vanes and said screen member.

3. Screening apparatus as claimed in claim 2, wherein the minimum distance between said vanes (35, 56) and each of said bars (40, 55) is of the order of 1.59 mm.

4. A screen member as claimed in claim 1, or screening apparatus as claimed in claim 2 or 3, wherein the circumferential spacing of adjacent said bars (40, 55) is in the range of approximately 12.7 to 127 mm.

5. A screen member or screening apparatus as claimed in any preceding claim, wherein the dimension of each of said bars (40, 55) is approximately 6.35 by 6. 35 mm in cross section and the circumferential spacing of adjacent said bars (40, 55) is of the order of 50.8 mm.

**Patentansprüche**

1. Zylindrisches Siebteil (15, 50) für den Einbau im Gehäuse (10) einer Siebvorrichtung für Papierfaserstoff zur Trennung des Inneren derselben in eine Zuführkammer (17) und eine Gutstoffkammer (18), wobei die Siebvorrichtung Rotoreinrichtungen (30), einschließlich Schaufeln (35, 56) aufweist, die in der Zuführkammer (17) entlang einem zylindrischen Weg konzentrisch zu dem Siebkörper (15, 50) sowie in vorbestimmten Abstand von diesem bewegbar angeordnet sind, um den Stoff bzw. die Stoffaufschwämmung zu veranlassen, auf einem ähnlichen Kreisweg um die Einlaßseite des Siebteils umzulaufen, wobei Mehrfachperforationen (16) durch das Siebteil hindurchgehen, an welchem eine Mehrzahl von Stäben (40, 55) befestigt ist, die sich im allgemeinen axial zum Siebteil längs und am Umfang im allgemeinen in gleichmäßigen Abständen um das Teil herum erstrecken und im allgemeinen radial von der Einlaßseite des Siebteils verlaufen, und wobei die Stäbe, wenn sich die Schaufeln auf dem zylindrischen Weg in der Zuführkammer während des Betriebes der Siebvorrichtung bewegen, mit der benachbarten Oberfläche der Einlaßseite des Siebteils eine Reihe von Taschen bilden, in denen im Betrieb Turbulenz erzeugt wird und die Umwälzung des Stoffes unterbrochen wird, gekennzeichnet durch die Kombination von Perforationen (16), die im wesentlichen zylindrisch sind, mit Stäben (40, 55), die derart angeordnet sind, daß der Abstand benachbarter Stäbe (40, 55) am Umfang im Bereich von etwa 6,35 mm bis 127 mm liegt, und die so bemessen sind, daß das Maß jedes Stabes radial zum Siebteil (15, 50) gemessen im Bereich von etwa 1,59 mm und 12,7 mm liegt.

2. Siebvorrichtung für Papierfaserstoff mit einem Gehäuse (10), einem zylindrischen Siebteil (15, 50) innerhalb des Gehäuses (10) unter Trennung seines Inneren in eine Zuführkammer (17) und eine Gutstoffkammer (18) auf gegenüberliegenden Seiten des Siebteiles und mit Mehrfachperforationen (16) durch das Sieb, Einlaßeinrichtungen (12, 13) für das Zuführen von Stoff zur Zuführkammer für den Durchgang durch die Perforationen zur Gutstoffkammer, getrennten Auslaßeinrichtungen (19, 24) für ausgeschiedenen und Gutstoff aus der Zuführ- und Gutstoffkammer, Rotoreinrichtungen (30), die von Antriebseinrichtungen (33) antreibbar sind, wobei die Rotoreinrichtungen (30) Schaufeln (35, 56) aufweisen, die in der Zuführkammer (17) längs eines zylindrischen Weges konzentrisch zu dem Siebteil (15, 50) und in einem bestimmten Abstand von diesem beweglich angeordnet sind, um den Stoff zu veranlassen, auf einem ähnlichen Kreisweg um die Einlaßseite des Siebteils umzulaufen, wobei Mehrfachperforationen (16) durch das Siebteil gehen, an welchem eine Mehrzahl von Stäben (40, 55) befestigt ist, die sich im allgemeinen axial dazu längs und im Umfang im allgemeinen in gleichförmigem Abstand herum erstrecken und im allgemeinen radial aus der Einlaßseite des Siebteiles herausragen, und die Stäbe, wenn sich die Schaufeln auf dem zylindrischen Weg in der Zuführkammer während des Betriebes der Siebvorrichtung bewegen, mit der benachbarten Oberfläche der Einlaßseite des Siebteils eine Reihe von Taschen bilden, in denen im Betrieb Turbulenz erzeugt und die Umwälzung des Stoffes unterbrochen wird, gekennzeichnet:

a) durch die Kombination von Perforationen (16), die im wesentlichen zylindrisch sind, mit Stäben (40, 55), die derart angeordnet sind, daß der Umfangsabstand benachbarter Stäbe (40, 55) im Bereich von etwa 6,35 mm bis 127 mm liegt, und die Stäbe eine solche Größe haben, daß das Maß jedes Stabes, radial zum Siebteil (15, 50) gemessen, im Bereich von etwa 1,59 mm bis 12,7 mm liegt; und

b) dadurch, daß der Radialabstand zwischen den Stäben (40, 55) und den Schaufeln im Bereich von etwa 0,25 bis 9,35 mm liegt und daß das Radialmaß jedes Stabes (40, 55) gleich dem Hauptteil des vorbestimmten Abstandes zwischen den Schaufeln und dem Siebteil ist.

3. Siebvorrichtung nach Anspruch 2, wobei der Minimalabstand zwischen den Schaufeln (35, 56) und jedem Stab (40, 55) in der Größenordnung von 1,59 mm liegt.

4. Siebteil nach Anspruch 1 oder Siebvorrichtung nach Anspruch 2 oder 3, wobei der Umfangsabstand benachbarter Stäbe (40, 55) im Bereich von etwa 12,7 bis 127 mm liegt.

5. Siebteil oder Siebvorrichtung nach einem der vorhergehenden Ansprüche, wobei die Abmessung jedes Stabes (40, 55) im Querschnitt etwa 6,35 mal 6,35 mm ist und der Umfangsabstand benachbarter Stäbe (40, 55) in der Größenordnung von 50,8 mm liegt.

**Revendications**

1. Organe de tamisage cylindrique (15, 50) destiné à être installé dans le cadre (10) d'un dispositif de tamisage pour pâte à papier pour séparer l'intérieur de ce logement en une chambre d'alimentation (17) et une chambre de matière passée (18), le dispositif de tamisage étant du type de ceux qui ont un moyen de rotor (30) comprenant des pales (35, 56) se déplaçant dans ladite chambre d'alimentation selon une trajectoire cylindrique concentrique à ce cylindre et espacé d'une distance prédéterminée dudit organe de tamisage (15, 50) pour amener la pâte à papier à circuler selon une trajectoire circulaire similaire autour du côté de l'admission dudit organe de tamisage, ledit organe de tamisage ayant plusieurs perforations (16) et ayant fixées sur lui une pluralité de barres (40, 55) s'étendant généralement axialement le long de ce cylindre et espacées généralement uniformément circonférentiellement autour et dépassant généralement radialement depuis le côté de l'admission dudit organe de tamisage, les barres, quand les pales se déplacent selon ladite trajectoire circulaire dans la chambre d'alimentation durant le fonctionnement du dispositif de tamisage, définissant avec la surface adjacente du côté de l'admission de l'organe de tamisage une série de poches dans lesquelles, en fonctionnement, une turbulence est engendrée et la circulation de la pâte à papier interrompue, caractérisé par une combinaison de perforations (16) qui sont sensiblement cylindriques, avec des barres (40, 55) qui sont arrangées de façon à ce que l'espacement circonférentiel de deux barres adjacentes (40, 55) soit dans une gamme comprise approximativement entre 6,35 et 127 mm et sont dimensionnées de façon à ce que la dimension de chacune desdites barres mesurée radialement par rapport audit organe de tamisage (15, 50) soit dans la gamme comprise approximativement entre 1,59 mm et 12,7 mm.

2. Dispositif de tamisage pour pâte à papier comprenant un cadre (10), un organe cylindrique de tamisage (15, 50) à l'intérieur dudit cadre (10) séparant l'intérieur de ce cadre en une chambre d'alimentation (17) et une chambre de matière passée (18) de part et d'autre dudit organe de tamisage et ayant plusieurs perforations (16) à travers, des moyens d'introduction (12, 13) pour introduire la pâte dans ladite chambre d'alimentation en vue de la faire passer à travers lesdites perforations vers ladite chambre de matière passée, des moyens séparés de sortie (19, 24) pour les matières rejetée et acceptée depuis lesdites chambres d'alimentation et de matière passée, un moyen de rotor (30) entraînable par des moyens d'entraînement (33), ledit moyen de rotor (30) comprenant des pales (35, 36) déplaçables dans ladite chambre d'alimentation (17) suivant une trajectoire cylindrique concentrique avec ledit moyen de rotor, et espacées d'une distance prédéterminée dudit organe de tamisage (15, 50) pour entraîner la pâte à papier à circuler selon une trajectoire circulaire similaire autour du côté de l'admission dudit organe de tamisage, ledit organe de tamisage ayant plusieurs perforations (16) à travers, et ayant fixées sur lui une pluralité de barres (40, 55) s'étendant généralement axialement et disposées généralement uniformément circonférentiellement autour et dépassant généralement radialement depuis le côté de l'admission dudit organe de tamisage, les barres, quand les pales se déplacent selon ladite trajectoire cylindrique dans la chambre d'alimentation durant le fonctionnement du dispositif de tamisage délimitant avec la surface adjacente du côté de l'admission de l'organe de tamisage, une série de poches dans lesquelles en fonctionnement, une turbulence est créée et la circulation de la pâte à papier interrompue, caractérisé:

(a) par la combinaison de perforations (16) qui sont sensiblement cylindriques avec des barres (40, 55) qui sont arrangées de façon à ce que l'espacement circonférentiel des barres adjacentes (40, 55) soit dans la gamme comprise approximativement entre 6,35 mm et 127 mm et qui sont dimensionnées de façon à ce que la dimension de chacune desdites barres mesurée radialement par rapport audit organe de tamisage (15, 50) soit dans la gamme comprise approximativement entre 1,59 mm et 12,7 mm; et

(b) en ce que l'espacement radial entre les barres (40, 55) et les pales est dans la gamme comprise approximativement entre 0,25 et 9,35 mm, et en ce que la dimension radiale de chacune desdites barres (40, 55) est égale à une partie importante de ladite distance prédéterminée entre lesdites pales et ledit organe de tamisage.

3. Dispositif de tamisage selon la revendication 2, caractérisé en ce que la distance minimale entre lesdites pales (35, 56) et chacune desdites barres (40, 55) est de l'ordre de 1,59 mm.

4. Organe de tamisage selon la revendication 1, ou dispositif de tamisage selon les revendications 2 ou 3, caractérisé en ce que l'espacement circonférentiel desdites barres adjacentes (40, 55) est dans la gamme comprise approximativement entre 12,7 et 127 mm.

5. Organe de tamisage ou dispositif de tamisage selon l'une quelconque des revendications précédentes, caractérisé en ce que la dimension de chacune desdites barres (40, 55) est approximativement de 6,35 par 6,35 mm en coupe transversale et en ce que l'espacement circonférentiel desdites barres adjacentes (40, 55) est de l'ordre de 50,8 mm.

0 046 687

FIG-1

FIG-2

FIG-3

FIG-4

2